# EUROPÄISCHE PATENTSCHRIFT

(11) **EP 3 785 937 B1**
(45) Veröffentlichungstag und Bekanntmachung des Hinweises auf die Patenterteilung: **12.10.2022**
(21) Anmeldenummer: 20189486.2
(22) Anmeldetag: 04.08.2020
(51) Int. Cl.: B60C 11/03

(54) **FAHRZEUGLUFTREIFEN**
PNEUMATIC TYRE
PNEUMATIQUE DE VÉHICULE

(30) Priorität: 29.08.2019 DE 102019213038
(43) Veröffentlichungstag der Anmeldung: 03.03.2021
(73) Patentinhaber: Continental Reifen Deutschland GmbH, 30165 Hannover (DE)
(72) Erfinder: Seng, Matthias, 30419 Hannover (DE); Brockmann, Jürgen, 30419 Hannover (DE); Heinhaupt, Torsten, 30419 Hannover (DE)
(74) Vertreter: Continental Corporation

(56) Entgegenhaltungen:
- EP-A1- 2 418 101
- EP-A1- 2 952 362
- EP-A1- 2 990 229
- EP-A1- 3 015 290
- EP-A1- 3 056 358
- EP-A2- 2 332 746
- US-A1- 2009 044 890

## Beschreibung

Die Erfindung betrifft einen Fahrzeugluftreifen mit einem laufrichtungsgebunden ausgeführten Laufstreifen mit einer in einem zentralen Laufstreifenbereich entlang der Reifenäquatorialebene und in Draufsicht zick-zack-förmig verlaufenden mittleren Umfangsrille aus miteinander stumpfe Winkel einschließenden Rillenabschnitten, an deren gegenseitigen Anschlussbereichen die mittlere Umfangsrille jeweils einen Rillenknick mit einer Knickaußenseite und einer Knickinnenseite aufweist, wobei an jeder Seite der mittleren Umfangsrille eine Gruppe von parallel zueinander verlaufenden, jeweils an einer Knickaußenseite in die mittlere Umfangsrille einmündenden Schrägrillen ausgebildet sind, wobei die Schrägrillen aus der einen Gruppe zu den Schrägrillen aus der anderen Gruppe bezüglich der Umfangsrichtung gegensinnig geneigt sind, wobei die Rillenabschnitte der zick-zack-förmig verlaufenden mittleren Umfangsrille zur Umfangsrichtung unter einem Winkel von 3° bis 15° verlaufen.

Ein derartiger Fahrzeugluftreifen ist beispielsweise aus der EP 3 015 290 A1 bekannt. Der Fahrzeugluftreifen weist einen laufrichtungsgebunden ausgeführten Laufstreifen mit einer in Draufsicht zick-zack-förmig verlaufenden mittleren Umfangsrille aus Rillenabschnitten auf, welche zur Umfangsrichtung unter einem Winkel von 1° bis 10° verlaufen. An jeder Seite der mittleren Umfangsrille ist eine Gruppe von parallel zueinander verlaufenden, jeweils an einer Knickaußenseite in die mittlere Umfangsrille einmündenden Schrägrillen ausgebildet, wobei die Schrägrillen aus der einen Gruppe zu den Schrägrillen aus der anderen Gruppe bezüglich der Umfangsrichtung gegensinnig geneigt sind. Die Schrägrillen verlaufen zur axialen Richtung unter einem Winkel von 10° bis 30° und somit zur Umfangsrichtung unter einem Winkel von 60° bis 80°, wodurch eine hohe Steifigkeit des Laufstreifens erhalten bleiben soll und eine gute Wasserdrainage erzielt werden soll.

Aus der US 2009/0044890 A1 ist ein Nutzfahrzeugreifen mit einem Laufstreifen mit zumindest fünf Umfangsrillen, umfassend eine entlang der Reifenäquatorialebene und in Draufsicht zick-zack-förmig verlaufende mittlere Umfangsrille, bekannt. Die mittlere Umfangsrille setzt sich aus ersten Rillenabschnitten und zweiten Rillenabschnitten zusammen, welche abwechselnd aufeinanderfolgen. Die ersten Rillenabschnitte verlaufen zur Umfangsrichtung unter einem Winkel von 15° bis 35°, insbesondere von 20° bis 30°, die zweiten Rillenabschnitte verlaufen zur Umfangsrichtung unter einem Winkel von 30° bis 45°, insbesondere von 20° bis 35°. In die mittlere Umfangsrille münden an den Knickaußenseiten Schrägrillen ein, welche gleichsinnig zur Umfangsrichtung geneigt sind und zur Umfangsrichtung unter einem Winkel von 50° bis 90°, insbesondere von 65° bis 85°, verlaufen.

Die EP 2 990 229 A1 offenbart einen Nutzfahrzeugreifen mit einem Laufstreifen mit zwei in Draufsicht zick-zack-förmig verlaufenden, mittleren Umfangsrillen und zwei in Draufsicht zick-zack-förmig verlaufenden, schulterseitigen Umfangsrillen. Zwischen den Umfangsrillen sind eine von der Reifenäquatorialebene im Wesentlichen halbierte Profilblockreihe sowie zwei weitere Profilblockreihen ausgebildet. Die Profilblockreihen weisen jeweils in Draufsicht hexagonale Profilblöcke auf, welche durch in Draufsicht parallel zueinander verlaufende Querrillen voneinander getrennt sind. In die Umfangsrillen münden an den Knickaußenseiten somit Gruppen von in Umfangsrichtung aufeinanderfolgenden Querrillen, welche parallel zueinander verlaufen, ein, wobei die Querrillen gegensinnig zueinander geneigt sind. Die Umfangsrillen setzen sich aus Rillenabschnitten zusammen, welche zur Umfangsrichtung unter einem Winkel von 15° bis 25° verlaufen.

Die EP 2 952 362 A1 offenbart einen Nutzfahrzeugreifen mit einem Laufstreifen mit zwei mittleren Profilrippen, zwei schulterseitigen Profilrippen, einer mittleren Umfangsrille und zwei schulterseitigen Umfangsrillen. Die mittlere Umfangsrille verläuft in Draufsicht zick-zack-förmig und setzt sich aus unter einem Winkel von 5° bis 15° zur Umfangsrichtung verlaufenden Rillenabschnitten zusammen. An den Knickaußenseiten der mittleren Umfangsrille münden in den mittleren Profilrippen verlaufende, einfach geknickte, sich insgesamt im Wesentlichen in axialer Richtung erstreckende Rillen ein. Die laufstreifeninnenseitigen Rillenabschnitte dieser Rillen können als Schrägrillen aufgefasst werden, wobei sämtliche Schrägrillen bezüglich der Umfangsrichtung gleichsinnig orientiert sind.

Aus der EP 2 418 101 A1 ist ein Nutzfahrzeugreifen mit einem Laufstreifen mit einer entlang der Reifenäquatorialebene und in Draufsicht zick-zack-förmig verlaufenden mittleren Umfangsrille bekannt, wobei an jeder Seite der Umfangsrille an den Knickaußenseiten Schrägrillen einmünden. Die mittlere Umfangsrille weist Rillenabschnitte auf, welche zur Umfangsrichtung unter einem Winkel ≤ 20° verlaufen. Die Schrägrillen verlaufen zur axialen Richtung unter einem Winkel von 20° bis 40° und daher zur Umfangsrichtung unter einem Winkel von 50° bis 70°.

Weitere Fahrzeugluftreifen sind beispielsweise aus der DE 10 2015 224 290 A1 und der DE 10 2016 217 970 A1 bekannt. Offenbart ist jeweils ein Fahrzeugluftreifen mit einem Laufstreifen mit V-förmig über die Laufstreifenbreite verlaufenden Schrägrillen, welche dem Laufstreifen ein "gepfeiltes" Profil verleihen. Die Schrägrillen erstrecken sich über die Reifenäquatorialebene hinaus, verlaufen über den Großteil ihrer Erstreckung zur Umfangsrichtung unter einem Winkel von höchstens 60° und weisen im Bereich von Schulterblockreihen unter einem Winkel von 70° bis 90° zur Umfangsrichtung verlaufende Rillenabschnitte auf. Die in der einen Laufstreifenhälfte verlaufenden Schrägrillen sind zu den in der anderen Laufstreifenhälfte verlaufenden Schrägrillen in Umfangsrichtung versetzt, wobei die Schrägrillen nahe der Reifenäquatorialebene ineinander einmünden und derart über ihre in diesem Bereich verlaufenden Endabschnitte eine in Draufsicht zick-zackförmige verlaufende, mittlere Umfangsrille bilden. Bei dem aus der DE 10 2015 224 290 A1 bekannten Reifen verlaufen die Endabschnitte der Schrägrillen beispielsweise unter einem Winkel von etwa 35°.

Die Auswirkungen von zick-zack-förmig verlaufenden Umfangsrillen auf die Schneegriffeigenschaften und das Aquaplaningverhalten des Reifens unterscheiden sich von jenen von gerade verlaufenen Umfangsrillen. In zick-zack-förmig verlaufenden Umfangsrillen kann sich beim Fahren auf schneebedeckter Fahrbahn gut Schnee ansammeln, wodurch, über den Effekt der Schnee-Schnee-Reinigung einerseits, und andererseits auch durch die gewinkelten Rillenkanten die Schneegriffeigenschaften vorteilhaft beinflussbar sind. Im Hinblick auf die Wasserdrainageeigenschaften sind üblicherweise gerade verlaufende Umfangsrillen zick-zack-förmig verlaufenden Umfangsrillen überlegen. Bei Fahrzeugluftreifen der eingangs genannten Art lässt sich Wasser aus den zick-zack-förmig verlaufende Umfangsillen hauptsächlich über die anschließenden Schrägrillen ableiten.

Der Erfindung liegt daher die Aufgabe zugrunde, bei einem Fahrzeugluftreifen der eingangs genannten Art, das Wasserableitverhalten unter Beibehaltung guter Schneegriffeigenschaften zu verbessern.

Gelöst wird die gestellte Aufgabe erfindungsgemäß dadurch, dass die Schrägrillen - ermittelt an ihren an den Knickaußenseiten der mittleren Umfangsrille liegenden Einmündungen - zur Umfangsrichtung unter einem Winkel verlaufen, welcher um 20° bis 45° größer ist als der Winkel der Rillenabschnitte der mittleren Umfangsrille.

Die erfindungsgemäße Rillenstruktur ist daher durch unter einem relativ geringen Winkel zur Umfangsrichtung geneigte, die zick-zack-förmig verlaufende Umfangsrille bildende Rillenabschnitte und zu diesen gewinkelt verlaufenden Schrägrillen gebildet. Die zick-zack-förmig verlaufende Umfangsrille ist somit einer gerade verlaufenden Umfangsrille angenähert, wodurch sich gegenüber Laufstreifenprofilen mit ausschließlich V-förmig über die Laufstreifenbreite verlaufenden Schrägrillen beim Durchlaufen der Bodenaufstandsfläche auf wirkungsvolle Weise Wasser in Umfangsrichtung durch die Bodenaufstandsfläche "durchleiten" lässt. Gleichzeitig werden Wasserteilströme aus der Umfangsrille in die Schrägrillen und damit in Richtung zum seitlichen Rand der Bodenaufstandsfläche abgeleitet, wodurch ein "Überlaufen" der zick-zack-förmig verlaufenden Umfangsrille verhindert wird. Weiterhin kann sich beim Fahren auf Schnee in der zick-zack-förmig verlaufenden Umfangsrille angesammelter Schnee sehr gut halten, wodurch gute Schneegriffeigenschaften erhalten bleiben. Der erfindungsgemäße Fahrzeugluftreifen liefert daher einen optimalen Kompromiss zwischen guten Schneeriffeigenschaften und gutem Verhalten bei Gefahr von Aquaplaning.

Die Schrägrillen wirken besonders vorteilhaft auf die beschriebene Weise mit der Umfangsrille zusammen, wenn der Winkel, unter welchem die Schrägrillen - ermittelt an ihren an der Umfangsrille liegenden Einmündungen - zur Umfangsrichtung verlaufen, um 25° bis 40°, insbesondere von 30° bis 38°, bevorzugt um zumindest 32°, größer ist als der Winkel der Rillenabschnitte der Umfangsrille relativ zur Umfangsrichtung.

Gemäß einer weiteren bevorzugten, für eine gute Wasserableitung vorteilhaften Ausführung weist bzw. weisen die Umfangsrille(n) eine Breite auf, welche 1,5% bis 3,5% der Breite der Bodenaufstandsfläche des Laufstreifens gemäß E.T.R.T.O.-Standards beträgt.

Ferner ist es bevorzugt, wenn die bzw. jede Umfangsrille derart ausgeführt ist, dass, im in axialer Richtung ausgerichteten Querschnitt durch die bzw. die jeweilige Umfangsrille betrachtet, keine Durchsicht ("look through") durch die bzw. die jeweilige Umfangsrille möglich ist.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine Draufsicht auf einen Ausschnitt eines Laufstreifens eines Fahrzeugluftreifens mit einer ersten Ausführungsvariante der Erfindung,
Fig. 2 eine Draufsicht auf einen Ausschnitt eines Laufstreifens eines Fahrzeugluftreifens mit einer zweiten Ausführungsvariante der Erfindung und
Fig. 3 eine Draufsicht auf einen Ausschnitt eines Laufstreifens für einen Fahrzeugluftreifen, der nicht erfindungsgemäß ausgeführt ist.

Gemäß der Erfindung ausgeführte Fahrzeugluftreifen sind insbesondere Reifen in Radialbauart für Personenkraftwagen, Vans oder Light-Trucks, wobei die Reifen zum Fahren unter winterlichen Fahrbedingungen vorgesehen sind.

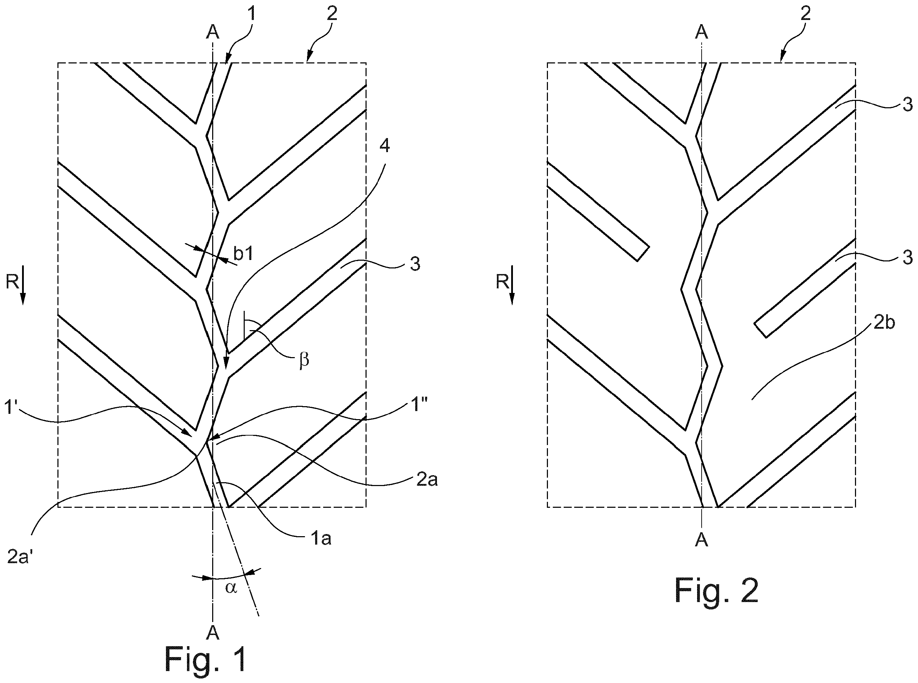

Fig. 1 bis Fig. 3 zeigen jeweils einen zentralen Ausschnitt eines Laufstreifens eines Fahrzeugluftreifens. Die Äquatorialebene des Reifens ist jeweils durch eine gestrichelte Linie A-A angedeutet. Der Laufstreifen weist bei den gezeigten Ausführungsbeispielen, wie noch genauer erläutert wird, eine laufrichtungsgebundene Profilierung auf und ist derart am Fahrzeug zu montieren, dass er die in den Figuren durch den Pfeil R angedeutete Abrollrichtung bei Vorwärtsfahrt aufweist.

Bei der in Fig. 1 gezeigten Variante weist der Laufstreifen eine im Bereich der Reifenäquatorialebene (Linie A-A) sowie in Draufsicht zickzack-förmig verlaufende, mittlere Umfangsrille 1 auf, welche auf die jeweils vorgesehene Profiltiefe von üblicherweise 6,5 mm bis 10,0 mm ausgeführt ist und an der Laufstreifenperipherie eine quer zum Rillenverlauf ermittelte, insbesondere konstante Breite b₁ von 3,0 mm bis 6,0 mm, vorzugsweise von bis zu 5,0 mm, aufweist. Die Breite b₁ der mittleren Umfangsrille 1 beträgt ferner insbesondere 1,5% bis 3,5% der in axialer Richtung ermittelten Breite der Bodenaufstandsfläche des Laufstreifens, wobei die Bodenaufstandsfläche dem statisch ermittelten Footprint gemäß E.T.R.T.O.-Standards (Last bei 70% der maximalen Tragfähigkeit bei einem Innendruck von 85% nach E.T.R.T.O.-Norm) entspricht.

Die mittlere Umfangsrille 1 setzt sich aus miteinander stumpfe Winkel einschließenden, gerade verlaufenden Rillenabschnitten 1a zusammen, welche zur Umfangsrichtung jeweils unter einem Winkel α von 3° bis 15°, insbesondere von bis zu 12°, besonderes bevorzugt von bis zu 10°, orientiert sind, wobei unmittelbar aufeinanderfolgende Rillenabschnitte 1a - entsprechend der Zickzack-Form - bezüglich der Umfangsrichtung gegensinnig zueinander geneigt sind. Die Größe des Winkels α kann - bedingt durch die sogenannte Pitchfolge des Laufstreifenprofils - um insbesondere bis zu 6° variieren. Die mittlere Umfangsrille 1 erstreckt sich dabei derart im Bereich der Reifenäquatorialebene, dass jeder Rillenabschnitt 1a die Reifenäquatorialebene schneidet. Am gegenseitigen Anschlussbereich der Rillenabschnitte 1a weist die Umfangsrille 1 jeweils einen Rillenknick mit einer Knickaußenseite 1' und einer Knickinnenseite 1" auf. Die Breite b₁ und der Winkel α sind derart aufeinander abgestimmt, dass, im in axialer Richtung ausgerichteten Querschnitt durch die Umfangsrille 1 betrachtet, keine Durchsicht durch die Umfangsrille 1 möglich ist (kein "look-through").

Die Umfangsrille 1 trennt zwei nebeneinander verlaufende Profilrippen 2, welche an der Umfangsrille 1 in Draufsicht vorspringende, dreieckförmige Rippenabschnitte 2a aufweisen, die jeweils von zwei unmittelbar aufeinanderfolgenden Rillenabschnitten 1a begrenzt sind und am gegenseitigen Anschlussbereich der Rillenabschnitte 1a, an den Knickinnenseiten 1" der Umfangsrille 1 einen stumpfwinkeligen Eckbereich 2a' aufweisen. Die Profilrippen 2 sind jeweils mit einer Anzahl von in Draufsicht parallel zueinander sowie beim gezeigten Ausführungsbeispiel gerade verlaufenden Schrägrillen 3 blockartig strukturiert, wobei die Schrägrillen 3 an den Knickaußenseiten 1' der Umfangsrille 1, also gegenüber den der stumpfwinkeligen Eckbereiche 2a', in die Umfangsrille 1 einmünden. Ferner sind die in der einen Profilrippe 2 verlaufenden Schrägrillen 3 zu den in der jeweils anderen Profilrippe 2 verlaufenden Schrägrillen 3 bezüglich der Umfangsrichtung gegensinnig geneigt. Die Schrägrillen 3 verlaufen zur Umfangsrichtung jeweils unter einem Winkel β und bilden mit den an der jeweiligen Knickaußenseite 1' an sie anschließenden Rillenabschnitten 1a in Draufsicht Y-förmige Rillenkreuzungen 4. Der Winkel β der Schrägrillen 3 ist um 20° bis 45°, insbesondere um 25° bis 40°, bevorzugt um 30° bis 38°, besonders bevorzugt um zumindest 32°, größer als der erwähnte Winkel α der Rillenabschnitte 1a der Umfangsrille 1.

Die Abrollrichtung des Reifens ist derart, dass die Schrägrillen 3 mit ihren an der Umfangsrille 1 liegenden, laufstreifeninnenseitigen Enden zuerst in den Untergrund eintreten.

Die in Fig. 2 gezeigte Variante unterscheidet sich von jener der Fig. 1 dadurch, dass in jeder Profilrippe 2 jede zweite Schrägrille 3 in einem Abstand vor der mittleren Umfangsrille 1 endet, sodass die Profilrippen 2 aus in Umfangsrichtung aufeinanderfolgenden Doppelblockstrukturen 2b gebildet sind, in welchen jeweils eine Schrägrille 3 ausläuft.

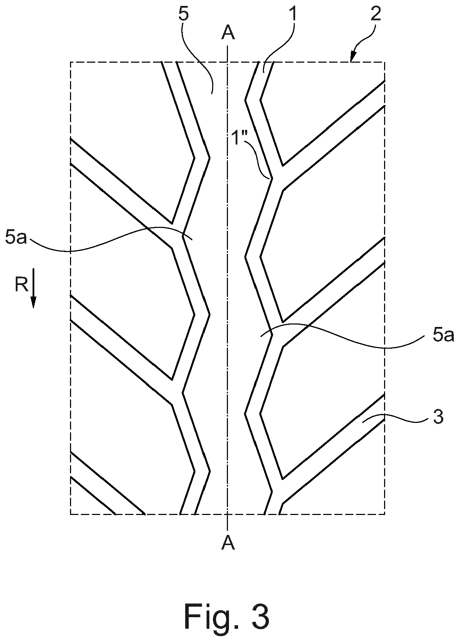

Bei der in Fig. 3 gezeigten Variante sind zwei zick-zack-förmig sowie parallel zueinander verlaufende mittlere Umfangsrillen 1 vorgesehen, welche sich an unterschiedlichen Seiten der Reifenäquatorialebene erstrecken. Die beiden Umfangsrillen 1 begrenzen gemeinsam eine in Umfangsrichtung umlaufende, zentrale Profilrippe 5 mit in Draufsicht dreieckförmigen Rippenbereichen 5a an jeder Umfangsrille 1, wobei laufstreifenaußenseitig der Umfangsrillen 1 jeweils eine analog zu Fig. 1 gestaltete Profilrippe 2 anschließt. In den Profilrippen 2 verlaufen Schrägrillen 3, welche gegenüber den dreieckförmigen Rippenbereichen 5a in die jeweilige Umfangsrille 1 einmünden.

Bei sämtlichen Ausführungsvarianten verläuft bzw. verlaufen die mittlere(n) Umfangsrille(n) 1 daher in einem zentralen, d.h. bezüglich der Reifenäquatorialebene symmetrischen, Laufstreifenbereich. Es ist dabei bevorzugt, wenn der zentrale Laufstreifenbereich in axialer Richtung eine Breite von 15% bis 25%, insbesondere von 15% bis 20%, der Breite der Bodenaufstandsfläche des Laufstreifens aufweist. Ferner ist es bevorzugt, wenn die Umfangsrille(n) 1 und die Schrägrillen 3 bei neuem Reifen im zentralen Laufstreifenbereich, ermittelt an der Laufstreifenperipherie, einen flächenmäßigen Negativanteil von 20% bis 30%, insbesondere von 22% bis 28%, der Gesamtfläche des zentralen Laufstreifenbereiches an der Laufstreifenperipherie aufweisen.

Die Erfindung ist auf die beschriebenen Ausführungsvarianten nicht beschränkt.

Die Schrägrillen verlaufen vorzugsweise bis zum jeweiligen seitlichen Rand des Laufstreifens, können in Draufsicht auch leicht gebogen verlaufen sowie zur Umfangsrichtung stärker geneigte, im Bereich von Schulterblockreihen verlaufende Rillenabschnitte aufweisen. Die geraden bzw. gebogenen Schrägrillen verlaufen - ermittelt an ihrer an der bzw. der jeweiligen Umfangsrille liegenden Einmündung - zur Umfangsrichtung unter einem um 20° bis 45° größeren Winkel als die Rillenabschnitte der Umfangsrille. Bei gebogenen Schrägrillen ist der Winkel gegenüber einer die Enden der gebogenen Mittellinie der Schrägrille verbindenden Linie ermittelt.

Bevorzugter Weise sind sämtliche Profilpositive des Laufstreifens mit insbesondere in an sich bekannter Weise ausgeführten Einschnitten versehen.

### Bezugszeichenliste

- 1: mittlere Umfangsrille
- 1a: Rillenabschnitt
- 1': Knickaußenseite
- 1": Knickinnenseite
- 2: Profilrippe
- 2a: Rippenabschnitt
- 2a': Eckbereich
- 2b: Doppelblockstruktur
- 3: Schrägrille
- 4: Rillenkreuzung
- 5: zentrale Profilrippe
- 5a: Rippenbereich
- A-A: Linie (Äquatorialebene)
- b₁: Breite
- R: Pfeil (Abrollrichtung)
- α, β: Winkel

## Patentansprüche

1. Fahrzeugluftreifen mit einem laufrichtungsgebunden ausgeführten Laufstreifen mit einer in einem zentralen Laufstreifenbereich entlang der Reifenäquatorialebene (A-A) und in Draufsicht zick-zack-förmig verlaufenden mittleren Umfangsrille (1) aus miteinander stumpfe Winkel einschließenden Rillenabschnitten (1a), an deren gegenseitigen Anschlussbereichen die mittlere Umfangsrille (1) jeweils einen Rillenknick mit einer Knickaußenseite (1') und einer Knickinnenseite (1") aufweist, wobei an jeder Seite der mittleren Umfangsrille (1) eine Gruppe von parallel zueinander verlaufenden, jeweils an einer Knickaußenseite (1') in die mittlere Umfangsrille (1) einmündenden Schrägrillen (3) ausgebildet sind, wobei die Schrägrillen (3) aus der einen Gruppe zu den Schrägrillen (3) aus der anderen Gruppe bezüglich der Umfangsrichtung gegensinnig geneigt sind, wobei die Rillenabschnitte (1a) der zick-zack-förmig verlaufenden mittleren Umfangsrille (1) zur Umfangsrichtung unter einem Winkel (a) von 3° bis 15° verlaufen,
**dadurch gekennzeichnet,**
**dass** die Schrägrillen (3) - ermittelt an ihren an den Knickaußenseiten (1') der mittleren Umfangsrille (1) liegenden Einmündungen - zur Umfangsrichtung unter einem Winkel (β) verlaufen, welcher um 20° bis 45° größer ist als der Winkel (α) der Rillenabschnitte (1a) der mittleren Umfangsrille (1).

2. Fahrzeugluftreifen nach Anspruch 1, **dadurch gekennzeichnet, dass** der Winkel (β), unter welchem die Schrägrillen (3) - ermittelt an ihren an der Umfangsrille (1) liegenden Einmündungen - zur Umfangsrichtung verlaufen, um 25° bis 40°, insbesondere von 30° bis 38°, bevorzugt um zumindest 32°, größer ist als der Winkel (α) der Rillenabschnitte (1a) der Umfangsrille (1) relativ zur Umfangsrichtung.

3. Fahrzeugluftreifen nach Anspruch 1 oder 2, **dadurch gekennzeichnet, dass** die Umfangsrille (1) eine Breite (b₁) aufweist, welche 1,5% bis 3,5% der Breite der Bodenaufstandsfläche des Laufstreifens gemäß E.T.R.T.O.-Standards beträgt.

4. Fahrzeugluftreifen nach einem der Ansprüche 1 bis 3, **dadurch gekennzeichnet, dass** an jeder Seite der Umfangsrille (1) an jeder oder an jeder zweiten Knickaußenseite (1') jeweils eine Schrägrille (3) einmündet.

5. Fahrzeugluftreifen nach einem der Ansprüche 1 bis 4, **dadurch gekennzeichnet, dass** die Umfangsrille (1) derart ausgeführt ist, dass im in axialer Richtung ausgerichteten Querschnitt durch die Umfangsrille (1) betrachtet, keine Durchsicht durch die Umfangsrille (1) gegeben ist.

## Claims

1. Pneumatic vehicle tyre with a tread strip of directional configuration with a central circumferential groove (1) which runs in a central tread strip region along the tyre equator plane (A-A) and in a zigzag-shaped manner in plan view and consists of groove portions (1a) which include obtuse angles with one another and on the mutual connector regions of which the central circumferential groove (1) in each case has a groove bend with a bend outer side (1') and a bend outer side (1"), a group of oblique grooves (3) which run parallel to one another and open in each case on a bend outer side (1') into the central circumferential groove (1) being configured on each side of the central circumferential groove (1), the oblique grooves (3) from the one group being inclined with regard to the circumferential direction in the opposite direction with respect to the oblique grooves (3) from the other group, the groove portions (1a) of the central circumferential groove (1) which runs in a zigzag-shaped manner at an angle (α) of from 3° to 15° with respect to the circumferential direction, **characterized in that**, determined at the openings which lie on the bend outer sides (1') of the central circumferential groove (1), the oblique grooves (3) run with respect to the circumferential direction at an angle (β) which is greater by from 20° to 45° then the angle (α) of the groove portions (1a) of the central circumferential groove (1).

2. Pneumatic vehicle tyre according to Claim 1, **characterized in that** the angle (β), at which, determined at their openings which lie on the circumferential groove (1), the oblique grooves (3) run with respect to the circumferential direction, is greater by from 25° to 40°, in particular by from 30° to 38°, preferably by at least 32°, then the angle (a) of the groove portions (1a) of the circumferential groove (1) relative to the circumferential direction.

3. Pneumatic vehicle tyre according to Claim 1 or 2, **characterized in that** the circumferential groove (1) has a width (b₁) which is from 1.5% to 3.5% of the width of the ground contact area of the tread strip in accordance with ETRTO standards.

4. Pneumatic vehicle tyre according to one of Claims 1 to 3, **characterized in that** in each case one oblique groove (3) opens on each side of the circumferential groove (1) on every or on every second bend outer side (1').

5. Pneumatic vehicle tyre according to one of Claims 1 to 4, **characterized in that** the circumferential groove (1) is configured in such a way that there is no look-through through the circumferential groove (1), as viewed in the cross section, oriented in the axial direction, through the circumferential groove (1).

## Revendications

1. Pneumatique de véhicule comprenant une bande de roulement réalisée sous forme directionnelle comprenant une rainure circonférentielle centrale (1) s'étendant dans une zone de bande de roulement centrale le long du plan équatorial du pneumatique (A-A) et en zigzag en vue de dessus, composée de sections de rainure (1a) formant des angles obtus entre elles, dans les zones de raccordement mutuel desquelles la rainure circonférentielle centrale (1) présente respectivement une inflexion de rainure avec un côté extérieur d'inflexion (1') et un côté intérieur d'inflexion (1"), un groupe de rainures obliques (3) s'étendant parallèlement les unes aux autres, débouchant respectivement dans la rainure circonférentielle centrale (1) sur un côté extérieur d'inflexion (1') étant formé sur chaque côté de la rainure circonférentielle centrale (1), les rainures obliques (3) de l'un des groupes étant inclinées en sens inverse des rainures obliques (3) de l'autre groupe au regard de la direction circonférentielle, les sections de rainure (1a) de la rainure circonférentielle centrale (1) s'étendant en zigzag s'étendant selon un angle (α) de 3° à 15° par rapport à la direction circonférentielle,
**caractérisé en ce que**
les rainures obliques (3) s'étendent - tel que déterminé au niveau de leurs embouchures situées sur les côtés extérieurs d'inflexion (1') de la rainure circonférentielle centrale - par rapport à la direction circonférentielle selon un angle (β) qui est supérieur de 20° à 45° à l'angle (α) des sections de rainure (1a) de la rainure circonférentielle centrale (1).

2. Pneumatique de véhicule selon la revendication 1, **caractérisé en ce que** l'angle (β) selon lequel les rainures obliques (3) s'étendent - tel que déterminé au niveau de leurs embouchures situées sur la rainure circonférentielle (1) - par rapport à la direction circonférentielle est supérieur de 25° à 40°, notamment de 30° à 38°, de préférence d'au moins 32°, à l'angle (α) des sections de rainure (1a) de la rainure circonférentielle (1) relativement à la direction circonférentielle.

3. Pneumatique de véhicule selon la revendication 1 ou 2, **caractérisé en ce que** la rainure circonférentielle (1) présente une largeur (b₁) qui est de 1,5 % à 3,5 % de la largeur de la surface de contact avec le sol de la bande de roulement selon les normes E.T.R.T.O.

4. Pneumatique de véhicule selon l'une quelconque des revendications 1 à 3, **caractérisé en ce qu'**une rainure oblique (3) débouche respectivement de chaque côté de la rainure circonférentielle (1) sur chaque ou chaque deuxième côté extérieur d'inflexion (1').

5. Pneumatique de véhicule selon l'une quelconque des revendications 1 à 4, **caractérisé en ce que** la rainure circonférentielle (1) est réalisée de telle sorte que, tel que considéré dans la coupe transversale orientée dans la direction axiale à travers la rainure circonférentielle (1), il n'y a pas de visibilité à travers la rainure circonférentielle (1).
